# EUROPEAN PATENT SPECIFICATION

(11) **EP 2 493 144 B1**
(45) Date of publication and mention of the grant of the patent: **25.06.2014**
(21) Application number: 12155717.7
(22) Date of filing: 16.02.2012
(51) Int. Cl.: H04L 29/06

(54) **Communications system for performing secure transactions based upon mobile wireless communications device proximity and related methods**
Kommunikationssystem zur Durchführung sicherer Transaktionen auf Grundlage der Nähe einer mobilen drahtlosen Kommunikationsvorrichtung und zugehörige Verfahren
Système de communication pour la réalisation de transactions sécurisées basé sur la proximité du dispositif de communication mobile sans fil et procédés associés

(30) Priority: 28.02.2011 US 201113036827
(43) Date of publication of application: 29.08.2012
(73) Proprietor: BlackBerry Limited, Waterloo, ON N2K 0A7 (CA)
(72) Inventor: Pasquero, Jerome, Waterloo, Ontario N2L 3W8 (CA); Walker, David Ryan, Waterloo, Ontario N2L 3W8 (CA)
(74) Representative: Hibbert, Juliet Jane Grace

(56) References cited:
- EP-A1- 2 182 493
- WO-A2-2010/039337

## Description

### Technical Field

This application relates to the field of communications, and more particularly, to wireless communications devices and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near-field communication (NFC) chips. NFC technology is used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of an example communications system for performing secure transactions based mobile wireless communications device proximity.

FIG. 2 is a schematic block diagram of an alternative example embodiment of the communications system of FIG. 1.

FIG. 3 is a schematic block diagram of an example mobile wireless communications device for use with the communications system of FIG. 2.

FIGS. 4-6 are flow diagrams illustrating example method aspects associated with the communications systems of FIGS. 1 and 2.

FIG. 7 is a schematic block diagram illustrating example components which may be used in the mobile wireless communications devices of FIGS. 1 through 3.

### Detailed Description

The present description is made with reference to the accompanying drawings, in which example embodiments are shown. However, many different embodiments may be used, and thus the claims should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communications system is provided herein which may include a plurality of mobile wireless communications devices configured to determine proximity between one another. At least one of the mobile wireless communications devices may also be configured to generate a secure transaction request based upon the determined proximity. The system may further include a transaction terminal configured to receive the secure transaction request and perform a secure transaction based thereon. Accordingly, the communications system may advantageously provide a relatively quick and convenient approach for third party authorization of secure transactions based upon proximity.

By way of example, the plurality of mobile wireless communications devices may be configured to be wirelessly paired together via near-field communication (NFC) when in proximity to one another. In accordance with another example, the plurality of mobile wireless communications devices may be configured to be wirelessly paired together via Bluetooth communication when in proximity to one another. Also by way of example, the secure transaction may comprise a secure financial transaction, a secure physical access operation, etc. Furthermore, the at least one mobile wireless communications device may send the secure transaction request via NFC, Bluetooth, etc., for example. Additionally, the plurality of mobile wireless communications devices may comprise cellular transceivers and may be configured to determine proximity to one another based upon communications with a cellular network.

A similar communications system may include a plurality of mobile wireless communications devices, where at least one of the mobile wireless communications devices may be configured to generate a secure transaction request. The system may also include a transaction terminal configured to receive the secure transaction request, determine whether the plurality of mobile wireless communications devices are in proximity to one another, and perform a secure transaction based upon the received secure transaction request and the plurality of mobile wireless communications devices being in proximity to one another.

A related transaction terminal may include a wireless receiver and a controller coupled therewith and configured to receive a secure transaction request from at least one of a plurality of mobile wireless communications devices, and determine whether the plurality of mobile wireless communications devices are in proximity to one another. The controller may be further configured to perform a secure transaction based upon the received secure transaction request and the plurality of mobile wireless communications devices being in proximity to one another.

A related communications method may include determining proximity between a plurality of mobile wireless communications devices, and generating a secure transaction request from at least one of the mobile wireless communications devices based upon the determined proximity. The method may further include receiving the secure transaction request at a transaction terminal and performing a secure transaction with the transaction terminal based thereon.

Another related communications method may include generating a secure transaction request from at least one of a plurality of mobile wireless communications devices, receiving the secure transaction request at a transaction terminal, and determining, with the transaction terminal, whether the plurality of mobile wireless communications devices are in proximity to one another. The method may further include performing a secure transaction with the transaction terminal based upon the received secure transaction request and the plurality of mobile wireless communications devices being in proximity to one another.

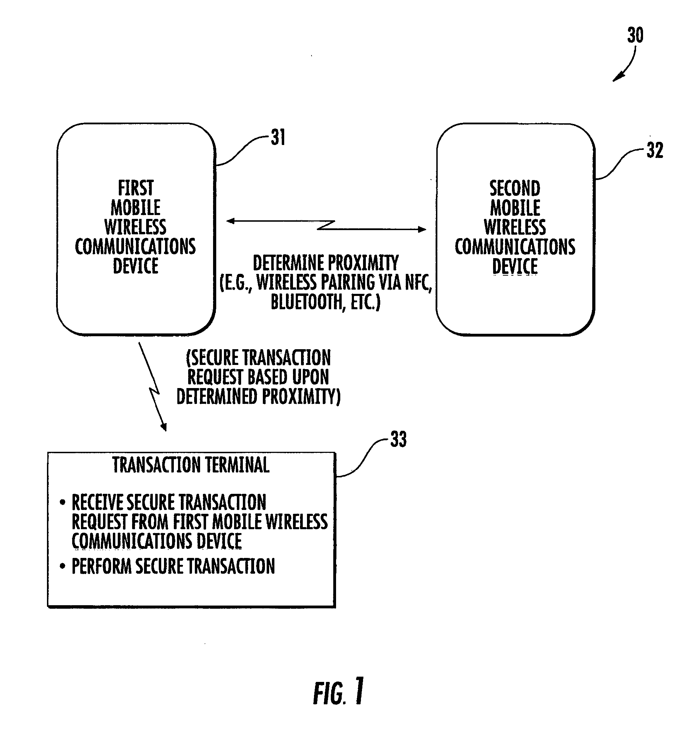

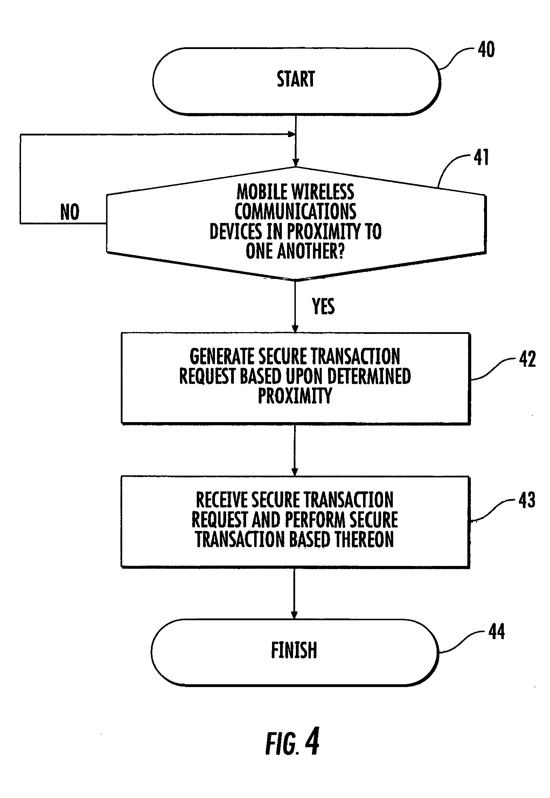

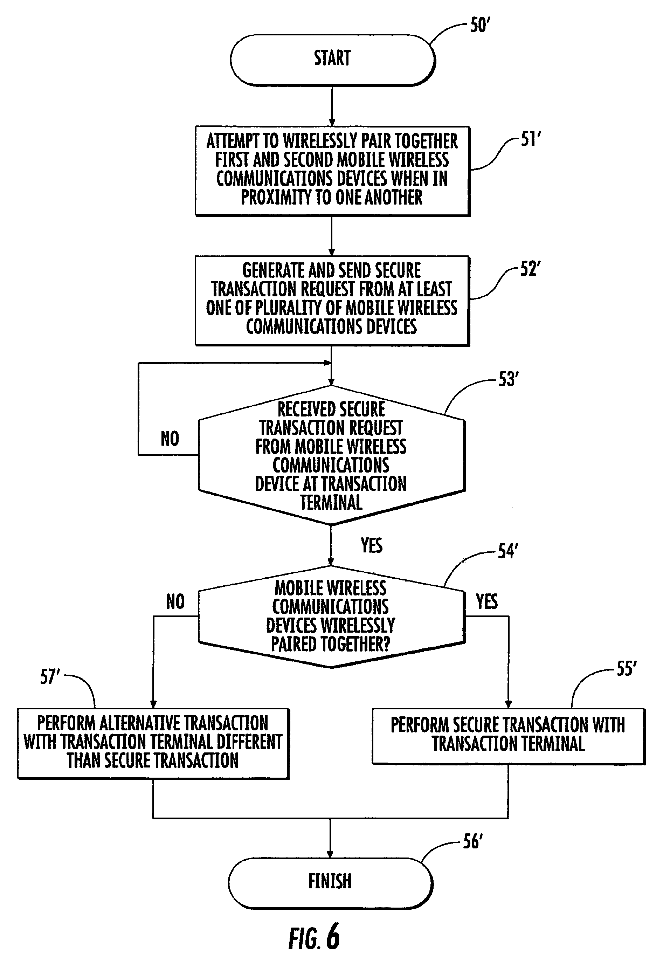

Referring initially to FIGS. 1-6, a communications system **30** and related method aspects are first described. Generally speaking, the communications system **30** may advantageously provide for enhanced speed, security, and customization of mobile transactions. More particularly, the system **30** illustratively includes first and second mobile wireless communications devices **31, 32** (also referred to as "mobile devices" herein), and a transaction terminal **33.** Beginning at Block **40** (see FIG. 4), one or more of the mobile devices **31, 32** is configured to generate a secure transaction request based upon a determination that the mobile devices are in proximity to one another, at Blocks **41-42.** The secure transaction request is communicated or sent to a transaction terminal **33,** which is configured to receive the secure transaction request and perform a secure transaction based thereon, at Block **43,** which concludes the method illustrated in FIG. 4 (Block **44**). Example mobile devices **31, 32** may include portable or personal media players (e.g., MP3 players, video players, etc.), remote controls (e.g., television or stereo remotes, etc.), portable gaming devices, portable or mobile telephones, smartphones, etc.

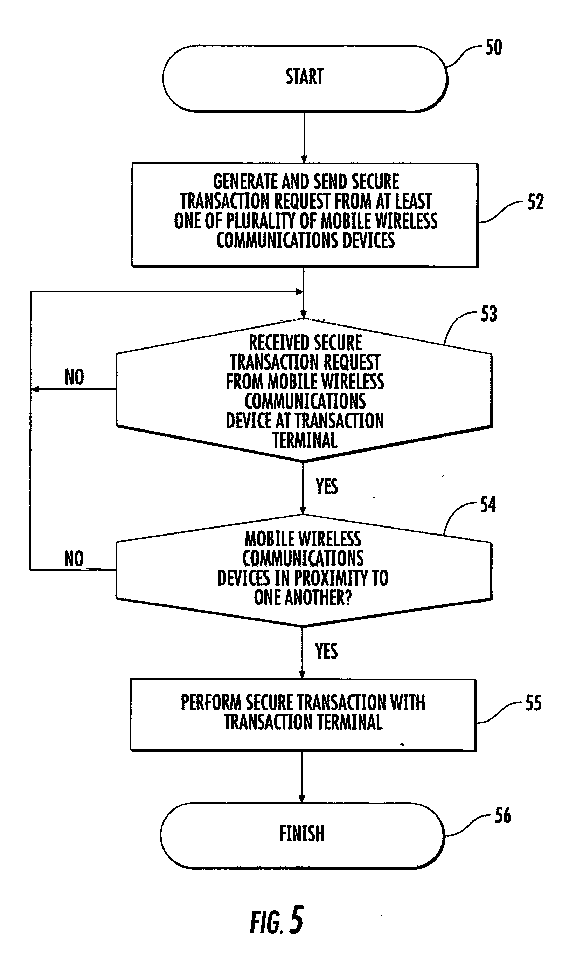

Beginning at Blocks **50, 50'** (see FIGS. 5-6), the first and second mobile devices **31, 32,** when in proximity to one another, may be configured to wirelessly pair together with one another, at Block **51'.** That is, proximity between the first and second mobile devices **31, 32** may be determined based upon the mobile devices coming within wireless communications range of one another. For example, the first and second mobile devices **31, 32** may be configured to communicate via near-field communication (NFC), and therefore use NFC for wireless pairing therebetween.

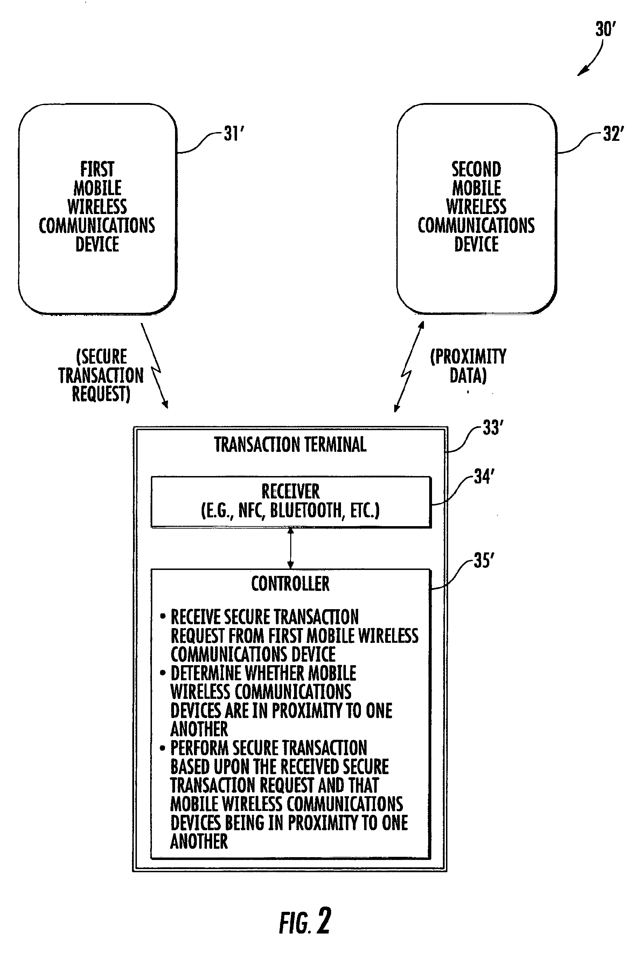

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used. Another example wireless communications format that may be used for pairing of the first and second mobile devices **31, 32** is Bluetooth. As shown in FIG. 2, the transaction terminal **33'** may similarly include a receiver **34'** (or transceiver) configured to communicate via NFC, Bluetooth, etc.

However, it should be noted that other approaches besides wireless pairing for determining proximity between the first and second mobile devices **31, 32** may also be used in some embodiments. For example, Internet-based services such as Google Latitude allow mobile device users to track the whereabouts of one another based upon global positioning system (GPS) measurements, cell tower triangulation, etc. This is one example approach by which the first mobile device **31** may determine that the second mobile device **32** is in proximity thereto, or vice-versa. Other similar location or tracking services or systems may also be used.

By way of example, the secure transaction request may be for a secure financial transaction, such as a purchase transaction if the transaction terminal **33** is a point-of-sale (POS) terminal. Other types of financial transactions may include monetary withdrawals where the transaction terminal **33** is an Automated Teller Machine (ATM) or similar monetary dispensing device, adding funds to a payment card (e.g., gift card, etc.), electronic fund transfers between different accounts, etc.

Still other examples of secure transactions which may be requested by the first mobile device **31** may include secure physical access operations. For example, the first mobile device **31** may generate or initiate a request to access a secure area, such as a safe or safe deposit box, or even a larger area such as a locked room or building, which is opened by the transaction terminal **33.** It should be noted that in some embodiments the transaction terminal **33** may be remotely located from the first mobile device **31,** such as where the transaction terminal comprises an Internet server that the first mobile devices accesses through a mobile browser or other mobile applications, for example.

Accordingly, the first mobile device **31** is permitted to generate and send the secure transaction request based upon the second mobile device **32** being in proximity thereto. Stated alternatively, the second mobile device **32** advantageously authorizes the first mobile device **31** to perform the desired security transaction and send the secure transaction request to the transaction terminal **33** based upon being in proximity thereto. In some embodiments, the first mobile device may be configured to send a secure transaction request for a different secure operation (e.g., a purchase not exceeding a threshold amount, etc.) if the second mobile device **32** is not in proximity to the first mobile device **31** to thereby authorize the transaction. Also, in some embodiments the second mobile device **32** may also be required to provide or grant permission for the secure transaction request, such as through a user interface which prompts a user of the second device to acknowledge that the requested secure transaction is permissible for the first mobile device **31.**

It should be noted, however, that in some embodiments the second mobile device **32** may communicate the secure transaction request to the transaction terminal **33.** For example, when in proximity to the second mobile device **32,** the first mobile device **31** may request that the second mobile device authorize the desired secure transaction, and the second mobile device communicates the authorized secure transaction request to the transaction terminal **33.**

In certain embodiments, such as the example embodiment shown in FIG. 2, the transaction terminal **33'** may make the determination as to whether the first and second mobile devices **31', 32'** are in proximity and, therefore, whether the requested secure transaction is authorized. That is, in the above-described example configuration illustrated in FIG. 1, the transaction terminal **33** is not required to make determinations or decisions as to whether the first and second mobile devices **31, 32** are in proximity to one another (although it may do so in some embodiments), but instead performs the requested transaction upon receiving a valid secure transaction request.

Here again, the first mobile device **31'** is configured to generate and send a secure transaction request, at Blocks **52, 52'.** The transaction terminal **33'** further illustratively includes a controller **35'** coupled with the receiver **34'.** The controller **35'** is configured to receive the secure transaction request via the receiver **34'** from the first mobile device **31',** at Blocks **53, 53',** and to determine that the first and second mobile devices **31, 32** are in close proximity, such as by being wirelessly paired together, at Blocks **54, 54'.** Upon the occurrence of these conditions, the requested secure transaction is performed, at Blocks **55, 55',** which concludes the illustrated methods (Blocks **56, 56'**). If all of the conditions do not occur or are not met, then the transaction may fail, timeout, or be cancelled in some example embodiments. The controller **35'** may be implemented using a combination of hardware (e.g., microprocessor, memory, etc.) and software components, such as a computer-readable medium having computer-executable instructions for performing the operations described herein.

In this way, the transaction terminal **33** may advantageously use information about trusted family members, friends, etc., that are physically present or in proximity to the first mobile device **31'** (and, therefore, the user requesting the secure transaction) to authorize or otherwise validate the secure transaction, whereas the given transaction would not otherwise occur or be permitted without such authorization or validation. That is, the first mobile device **31'** would not otherwise be authorized for, or have access to, the given secure transaction by itself or without separate identification. However, when in proximity or wirelessly paired with the second mobile device **32',** the first mobile device **31'** is authorized or otherwise validated for the secure transaction because of the proximity of the particular user known to be assigned to or associated with the second mobile device.

Data indicating that the second mobile device **32'** is permitted to authorize a secure transaction for the first mobile device **31'** may be stored by the controller **35'** (e.g., in a database or memory) in some example embodiments. Thus, once the controller **35'** determines the second mobile device **32'** is paired with the first mobile device **31'** (which it may do through communication with the first mobile device, or through separate communication directly with the second mobile device in some embodiments), it may compare an identification number (e.g., PIN, IMEI, etc.) associated with the second mobile device to its database to see if the second mobile device is a designated or authorization device for the first mobile device. In other example embodiments, the first mobile device **31'** may pass along valid financial or access data (e.g., credit or debit card number, account number, password, etc.) from the second mobile device **32'** in an encrypted form that authorizes the secure transaction.

In the context of a secure financial transaction example, the first mobile device **31, 31'** may be assigned to or associated with a child who is attempting to purchase an item at the transaction terminal **33, 33'** (e.g., a POS terminal). The second mobile device **32, 32'** may be assigned to or associated with a parent or guardian of the child. Because the first and second mobile devices **31, 31'** and **32, 32'** are in proximity to one another or wirelessly paired, the transaction terminal **33, 33'** is configured to accept this as an authorization from the second mobile device (and, thus, the parent) for the child (i.e., the first mobile device) to complete the purchase because of the proximity of the second mobile device to the first mobile device. It should be noted that the first and second mobile devices **31, 31'** and **32, 32'** may be wirelessly paired before or after the first mobile device wirelessly sends the secure transaction request depending on the given implementation.

In accordance with another example, if the first and second mobile devices **31, 31'** and **32, 32'** are in proximity or paired together, the user of the first mobile device **31, 31'** may not be prompted to provide a password or other identifier, whereas if the two devices were not in proximity or paired then the user of the first mobile device **31, 31'** may have to provide the password to authorize the transaction. In the case of secure physical access, wireless paring between the first and second devices **31, 31'** and **32, 32',** which may respectively be assigned to or associated with a husband and wife, may be required to access a joint safe deposit box of the husband and wife. In such case, either of the mobile devices **31, 31'** and **32, 32'** may be used to send the access request, and the other mobile device then serves as the second authorizing mobile device. In an example of an individual safe deposit box, the first mobile device **31** may be associated with a user or customer, while the second mobile device **32** may be associated with an authorized bank employee, for example.

It should be noted that the controller **35'** may be configured to perform an alternative transaction different than the secure transaction based upon receiving the secure transaction request and determining that the first and second mobile wireless communications devices are not wirelessly paired together, at Block **57'.** That is, the transaction terminal **33'** may allow a first transaction if the second mobile device **32'** is in proximity or paired with the first mobile device, and allow a second transaction if not. For example, in the case where the first mobile device **31'** is associated with a child and the second mobile device **32'** is associated with a parent, when the second mobile device is in proximity or paired with the first mobile device, the first mobile device may be permitted to spend a larger amount (e.g., $100), but a lesser amount when they are not in proximity or paired (e.g., $15).

In an example where the first mobile device **31, 31'** is assigned to a wife and the second mobile device **32, 32'** is assigned to her husband, when the two devices are in proximity or wirelessly paired then the transaction terminal may debit a joint bank account belonging to the husband and wife, but debit an individual account belonging solely to the wife if she is shopping alone. Such preferences on which account, etc., to use may be configured on the mobile devices **31, 31'** or **32, 32'** via a graphical user interface, or stored by the controller **35',** for example.

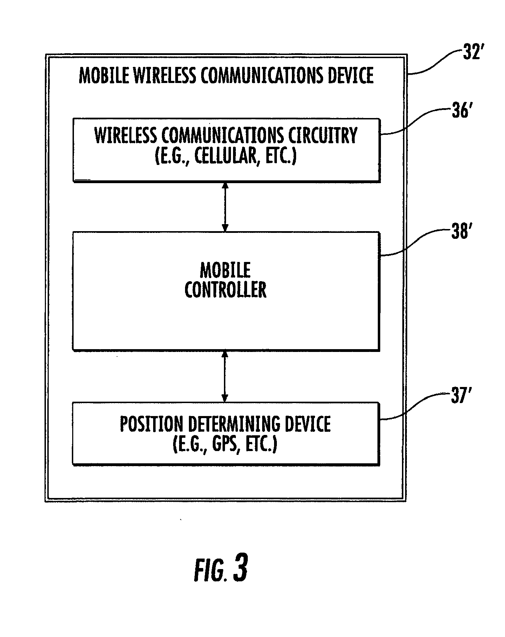

Referring additionally to FIG. 3, in some example embodiments the second mobile device **32, 32'** (or the first mobile device **31, 31'**) may further include wireless communications circuitry **36',** such as cellular communications circuitry, a position determining device **37'** (e.g., GPS, Galileo, GLONASS, etc.), and a mobile controller **38'** coupled with the wireless communications circuit and the position determining device. As noted above, the transaction terminal **33'** may communicate directly with the second mobile device **32'** via the wireless (e.g., cellular) communications circuitry **36'** to obtain position information or coordinates by which the controller **35'** may determine whether or not the first and second mobile devices **31', 32'** are in proximity. In other example embodiments, the transaction terminal **33'** and second mobile device **32'** may communicate directly via NFC, Bluetooth, wireless local area network (WLAN), etc., as well. Another approach which may be used by the transaction terminal **33'** to determine whether the first and second devices **31', 32'** are in proximity is through a location or tracking service such as the above-noted Google Latitude system, for example.

Various other example embodiments are also possible. Referring again to FIG. 2, the first mobile device **31'** may send a secure transaction request to the transaction terminal **33',** and also send a validation request to the second mobile device **32'** when in proximity thereto. The second mobile device **32'** may then send a copy of the transaction request (or other suitable identifier of the request) to the transaction terminal **33'** along with a confirmation. The controller **35'** will perform the requested security transaction if it has received both the transaction request from the first mobile device **31'** and the confirmation from the second mobile device **32**'.

Moreover, various combinations of the above-described example embodiments may also be used, such as to add redundancy to the system **30, 30'** to increase reliability and security. For example, the first mobile device **31, 31'** device may send a transaction validation request to the second mobile device **32, 32'.** The second mobile device **32, 32'** validates the secure transaction (through proximity, permission, or both) and sends a transaction request to the transaction terminal **33, 33'.** The transaction terminal **33, 33'** determines whether the first and second mobile devices **31, 31'** and **32, 32'** are still within proximity to one another, and processes the secure transaction (or not) accordingly.

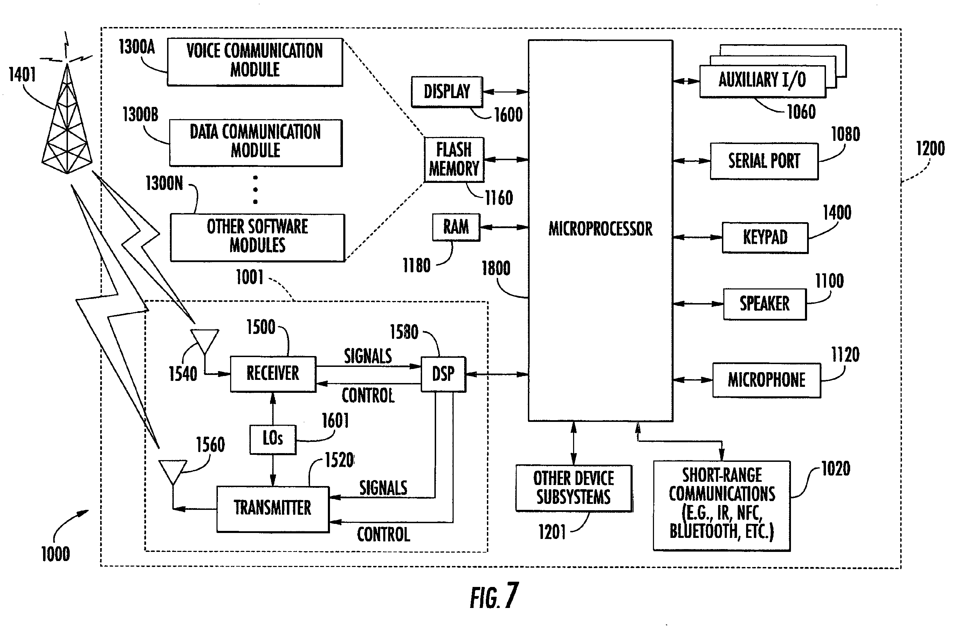

Example components of a mobile device **1000** that may further be used in accordance with the above-described embodiments are now described with reference to FIG. 7. The device **1000** illustratively includes a housing **1200,** a keypad or keyboard **1400** and an output device **1600.** The output device shown is a display **1600,** which may comprise a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400.**

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem 1001, and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem **1020** may include an infrared device and associated circuits and components, NFC or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communications system (30, 30') comprising:
a plurality of mobile wireless communications devices (31, 31'; 32, 32') ;
at least one of said mobile wireless communications devices (31, 31') being configured to generate a secure transaction request; and
a transaction terminal (33, 33') configured to receive the secure transaction request and perform a secure transaction based thereon, said transaction terminal (33, 33') accepting proximity of said mobile wireless communications devices to one another as authorization to perform the secure transaction, and said transaction terminal (33, 33') also requiring a separate transaction authorization from said at least one mobile wireless communications device (31, 31') to perform the secure transaction if said mobile wireless communications devices are not in proximity to one another.

2. The communications system of Claim 1 wherein said plurality of mobile wireless communications devices are configured to be wirelessly paired together via near-field communication (NFC) when in proximity to one another.

3. The communications system of Claim 1 wherein said plurality of mobile wireless communications devices are configured to be wirelessly paired together via Bluetooth communication when in proximity to one another.

4. The communications system of Claim 1 wherein the secure transaction comprises a secure financial transaction.

5. The communications system of Claim 1 wherein the secure transaction comprises a secure physical access operation.

6. The communications system of Claim 1 wherein said at least one mobile wireless communications device sends the secure transaction request via near-field communication (NFC).

7. The communications system of Claim 1 wherein said at least one mobile wireless communications device sends the secure transaction request via Bluetooth communication.

8. The communications system of Claim 1 wherein said plurality of mobile wireless communications devices comprise cellular transceivers (36', 1001); and wherein proximity of plurality of mobile wireless communications devices to one another is determined based upon communications with a cellular network (1401).

9. A transaction terminal (33') comprising:
a wireless receiver (34') ; and
a controller (35') coupled with the wireless receiver (34'), the controller being configured to
receive a secure transaction request from at least one of a plurality of mobile wireless communications devices (31', 32'),
determine whether the plurality of mobile wireless communications devices are in proximity to one another, and
accept proximity of the mobile wireless communications devices to one another as authorization to perform a secure transaction, and require a separate transaction authorization from the at least one mobile wireless communications device to perform the secure transaction if the mobile wireless communications devices are not in proximity to one another.

10. The transaction terminal of Claim 9 wherein the plurality of mobile wireless communications devices are configured to be wirelessly paired together via near-field communication (NFC) when in proximity to one another; and wherein said controller is configured to perform the secure transaction based upon the received secure transaction request and the plurality of mobile wireless communications devices being wirelessly paired together.

11. The transaction terminal of Claim 9 wherein the plurality of mobile wireless communications devices are configured to be wirelessly paired together via Bluetooth communication when in proximity to one another; and wherein said controller is configured to perform the secure transaction based upon the received secure transaction request and the plurality of mobile wireless communications devices being wirelessly paired together.

12. A communications method comprising:
generating a secure transaction request from at least one of a plurality of mobile wireless communications devices (31, 31'; 32, 32');
receiving the secure transaction request at a transaction terminal (33, 33');
determining, with the transaction terminal, whether the plurality of mobile wireless communications devices are in proximity to one another; and
with the transaction terminal, accepting proximity of the mobile wireless communications devices to one another as authorization to perform a secure transaction, and requiring a separate transaction authorization from the at least one mobile wireless communications device to perform the secure transaction if the mobile wireless communications devices are not in proximity to one another.

13. The method of Claim 12 further comprising wirelessly pairing the plurality of mobile wireless communications devices together via near-field communication (NFC) when in proximity to one another; and wherein determining comprises determining whether the plurality of mobile wireless communications are in proximity to one another based upon wireless pairing therebetween.

14. The method of Claim 12 further comprising wirelessly pairing the plurality of mobile wireless communications devices together via Bluetooth communication when in proximity to one another; and wherein determining comprises determining whether the plurality of mobile wireless communications are in proximity to one another based upon wireless pairing therebetween.

## Patentansprüche

1. Kommunikationssystem (30, 30'), das aufweist:
eine Vielzahl von mobilen drahtlosen Kommunikationsvorrichtungen (31, 31'; 32, 32');
wobei zumindest eine der mobilen drahtlosen
Kommunikationsvorrichtungen (31, 31') konfiguriert ist zum Erzeugen einer Anforderung für eine sichere Transaktion; und
ein Transaktionsendgerät (33, 33'), das konfiguriert ist zum Empfangen der Anforderung für eine sichere Transaktion und Durchführen einer sicheren Transaktion darauf basierend, wobei das Transaktionsendgerät (33, 33`) eine Nähe der mobilen drahtlosen Kommunikationsvorrichtungen zueinander als Autorisierung zum Durchführen der sicheren Transaktion akzeptiert, und das Transaktionsendgerät (33, 33`) auch eine getrennte Transaktions-Autorisierung von der zumindest einen mobilen drahtlosen Kommunikationsvorrichtung (31, 31`) erfordert, um die sichere Transaktion durchzuführen, wenn die mobilen drahtlosen Kommunikationsvorrichtungen nicht in Nähe zueinander sind.

2. Das Kommunikationssystem gemäß Anspruch 1, wobei die Vielzahl von mobilen drahtlosen Kommunikationsvorrichtungen konfiguriert ist, über eine Nahbereichskommunikation (NFC - Near Field Communication) drahtlos einander paarweise zugewiesen zu werden, wenn in Nähe zueinander.

3. Das Kommunikationssystem gemäß Anspruch 1, wobei die Vielzahl von mobilen drahtlosen Kommunikationsvorrichtungen konfiguriert ist, über eine Bluetooth-Kommunikation drahtlos einander paarweise zugewiesen zu werden, wenn in Nähe zueinander.

4. Das Kommunikationssystem gemäß Anspruch 1, wobei die sichere Transaktion eine sichere Finanztransaktion aufweist.

5. Das Kommunikationssystem gemäß Anspruch 1, wobei die sichere Transaktion eine sichere physikalische Zugangsoperation aufweist.

6. Das Kommunikationssystem gemäß Anspruch 1, wobei die zumindest eine mobile drahtlose Kommunikationsvorrichtung die Anforderung für eine sichere Transaktion über eine Nahbereichskommunikation (NFC - Near Field Communication) sendet.

7. Das Kommunikationssystem gemäß Anspruch 1, wobei die zumindest eine mobile drahtlose Kommunikationsvorrichtung die Anforderung für eine sichere Transaktion über eine Bluetooth-Kommunikation sendet.

8. Das Kommunikationssystem gemäß Anspruch 1, wobei die Vielzahl von mobilen drahtlosen Kommunikationsvorrichtungen zellulare Transceiver (36', 1001) aufweist; und wobei eine Nähe einer Vielzahl von mobilen drahtlosen Kommunikationsvorrichtungen zueinander bestimmt wird basierend auf Kommunikationen mit einem zellularen Netzwerk (1401).

9. Ein Transaktionsendgerät (33'), das aufweist:
einen drahtlosen Empfänger (34'); und
eine Steuervorrichtung (35'), die mit dem drahtlosen Empfänger (34') gekoppelt ist, wobei die Steuervorrichtung konfiguriert ist zum Empfangen einer Anforderung für eine sichere Transaktion von zumindest einer aus einer Vielzahl von mobilen drahtlosen Kommunikationsvorrichtungen (31', 32'), Bestimmen, ob die Vielzahl von mobilen drahtlosen Kommunikationsvorrichtungen in Nähe zueinander sind, und Akzeptieren einer Nähe der mobilen drahtlosen Kommunikationsvorrichtungen zueinander als Autorisierung zum Durchführen einer sicheren Transaktion, und Erfordern einer getrennten Transaktions-Autorisierung von der zumindest einen mobilen drahtlosen Kommunikationsvorrichtung, um die sichere Transaktion durchzuführen, wenn die mobilen drahtlosen Kommunikationsvorrichtungen nicht in Nähe zueinander sind.

10. Das Transaktionsendgerät gemäß Anspruch 9, wobei die Vielzahl von mobilen drahtlosen Kommunikationsvorrichtungen konfiguriert ist, über eine Nahbereichskommunikation (NFC - Near Field Communication) drahtlos einander paarweise zugewiesen zu werden, wenn in Nähe zueinander; und wobei die Steuervorrichtung konfiguriert ist zum Durchführen der sicheren Transaktion basierend auf der empfangenen Anforderung für die sichere Transaktion und darauf, dass die Vielzahl von mobilen drahtlosen Kommunikationsvorrichtungen drahtlos einander paarweise zugewiesen sind.

11. Das Transaktionsendgerät gemäß Anspruch 9, wobei die Vielzahl von mobilen drahtlosen Kommunikationsvorrichtungen konfiguriert ist, über eine Bluetooth-Kommunikation drahtlos einander paarweise zugewiesen zu werden, wenn in Nähe zueinander; und wobei die Steuervorrichtung konfiguriert ist zum Durchführen der sicheren Transaktion basierend auf der empfangenen Anforderung für die sichere Transaktion und darauf, dass die Vielzahl von mobilen drahtlosen Kommunikationsvorrichtungen drahtlos einander paarweise zugewiesen sind.

12. Ein Kommunikationsverfahren, das aufweist:
Erzeugen einer Anforderung für eine sichere Transaktion von zumindest einer aus einer Vielzahl von mobilen drahtlosen Kommunikationsvorrichtungen (31, 31'; 32, 32');
Empfangen der Anforderung für eine sichere Transaktion an einem Transaktionsendgerät (33, 33');
Bestimmen, mit dem Transaktionsendgerät, ob die Vielzahl von mobilen drahtlosen Kommunikationsvorrichtungen in Nähe zueinander sind; und
mit dem Transaktionsendgerät, Akzeptieren einer Nähe der mobilen drahtlosen Kommunikationsvorrichtungen zueinander als Autorisierung zum Durchführen einer sicheren Transaktion, und Erfordern einer getrennten Transaktions-Autorisierung von der zumindest einen mobilen drahtlosen Kommunikationsvorrichtung, um die sichere Transaktion durchzuführen, wenn die mobilen drahtlosen Kommunikationsvorrichtungen nicht in Nähe zueinander sind.

13. Das Verfahren gemäß Anspruch 12, das weiter aufweist ein drahtloses einander paarweises Zuweisen der Vielzahl von mobilen drahtlosen Kommunikationsvorrichtungen über eine Nahbereichskommunikation (NFC - Near Field Communication), wenn in Nähe zueinander; und wobei das Bestimmen aufweist ein Bestimmen, ob die Vielzahl von mobilen drahtlosen Kommunikationsvorrichtungen in Nähe zueinander sind basierend auf einer drahtlosen paarweisen Zuweisung zwischen diesen.

14. Das Verfahren gemäß Anspruch 12, das weiter aufweist ein drahtloses einander paarweises Zuweisen der Vielzahl von mobilen drahtlosen Kommunikationsvorrichtungen über eine Bluetooth-Kommunikation, wenn in Nähe zueinander; und wobei das Bestimmen aufweist ein Bestimmen, ob die Vielzahl von mobilen drahtlosen Kommunikationsvorrichtungen in Nähe zueinander sind basierend auf einer drahtlosen paarweisen Zuweisung zwischen diesen.

## Revendications

1. Système de communication (30, 30') comprenant :
une pluralité de dispositifs de communication sans fil mobiles (31, 31' ; 32, 32') ;
au moins l'un desdits dispositifs de communication sans fil mobiles (31, 31') étant configuré pour générer une demande de transaction sécurisée ; et
un terminal de transaction (33, 33') configuré pour recevoir la demande de transaction sécurisée et exécuter une transaction sécurisée sur la base de celle-ci, ledit terminal de transaction (33, 33') acceptant la proximité desdits dispositifs de communication sans fil mobiles l'un de l'autre comme autorisation pour exécuter la transaction sécurisée, et ledit terminal de transaction (33, 33') requérant également une autorisation de transaction séparée de la part dudit au moins un dispositif de communication sans fil mobile (31, 31') pour exécuter la transaction sécurisée si lesdits dispositifs de communication sans fil mobiles ne sont pas à proximité l'un de l'autre.

2. Système de communication de la revendication 1, dans lequel ladite pluralité de dispositifs de communication sans fil mobiles sont configurés de manière à être appariés l'un avec l'autre sans fil via une communication en champ proche (NFC) lorsqu'ils sont à proximité l'un de l'autre.

3. Système de communication de la revendication 1, dans lequel ladite pluralité de dispositifs de communication sans fil mobiles sont configurés de manière à être appariés l'un avec l'autre sans fil via une communication Bluetooth lorsqu'ils sont à proximité l'un de l'autre.

4. Système de communication de la revendication 1, dans lequel la transaction sécurisée comprend une transaction financière sécurisée.

5. Système de communication de la revendication 1, dans lequel la transaction sécurisée comprend une opération d'accès physique sécurisé.

6. Système de communication de la revendication 1, dans lequel ledit au moins un dispositif de communication sans fil mobile envoie la demande de transaction sécurisée via une communication en champ proche (NFC).

7. Système de communication de la revendication 1, dans lequel ledit au moins un dispositif de communication sans fil mobile envoie la demande de transaction sécurisée via une communication Bluetooth.

8. Système de communication de la revendication 1, dans lequel ladite pluralité de dispositifs de communication sans fil mobiles comprennent des émetteurs-récepteurs cellulaires (36', 1001) ; et dans lequel la proximité d'une pluralité de dispositifs de communication sans fil mobiles l'un de l'autre est déterminée sur la base de communications avec un réseau cellulaire (1401).

9. Terminal de transaction (33') comprenant :
un récepteur sans fil (34') ; et
un contrôleur (35') couplé au récepteur sans fil (34'), le contrôleur étant configuré pour
recevoir une demande de transaction sécurisée à partir d'au moins l'un d'une pluralité de dispositifs de communication sans fil mobiles (31', 32'),
déterminer si la pluralité de dispositifs de communication sans fil mobiles sont à proximité l'un de l'autre, et
accepter la proximité des dispositifs de communication sans fil mobiles l'un de l'autre comme autorisation pour exécuter une transaction sécurisée, et requérir une autorisation de transaction séparée de la part de l'au moins un dispositif de communication sans fil mobile pour exécuter la transaction sécurisée si les dispositifs de communication sans fil mobiles ne sont pas à proximité l'un de l'autre.

10. Terminal de transaction de la revendication 9, dans lequel la pluralité de dispositifs de communication sans fil mobiles sont configurés de manière à être appariés l'un avec l'autre sans fil via une communication en champ proche (NFC) lorsqu'ils sont à proximité l'un de l'autre ; et dans lequel ledit contrôleur est configuré pour exécuter la transaction sécurisée sur la base de la demande de transaction sécurisée reçue et de l'appariement sans fil de la pluralité de dispositifs de communication sans fil mobiles l'un avec l'autre.

11. Terminal de transaction de la revendication 9, dans lequel la pluralité de dispositifs de communication sans fil mobiles sont configurés de manière à être appariés l'un avec l'autre sans fil via une communication Bluetooth lorsqu'ils sont à proximité l'un de l'autre ; et dans lequel ledit contrôleur est configuré pour exécuter la transaction sécurisée sur la base de la demande de transaction sécurisée reçue et de l'appariement sans fil de la pluralité de dispositifs de communication sans fil mobiles l'un avec l'autre.

12. Procédé de communication comprenant le fait :
de générer une demande de transaction sécurisée à partir d'au moins l'un d'une pluralité de dispositifs de communication sans fil mobiles (31, 31' ; 32, 32') ;
de recevoir la demande de transaction sécurisée au niveau d'un terminal de transaction (33, 33') ;
de déterminer, avec le terminal de transaction, si la pluralité de dispositifs de communication sans fil mobiles sont à proximité l'un de l'autre ; et
avec le terminal de transaction, d'accepter la proximité des dispositifs de communication sans fil mobiles l'un de l'autre comme autorisation pour exécuter une transaction sécurisée, et de requérir une autorisation de transaction séparée de la part de l'au moins un dispositif de communication sans fil mobile pour exécuter la transaction sécurisée si les dispositifs de communication sans fil mobiles ne sont pas à proximité l'un de l'autre.

13. Procédé de la revendication 12, comprenant en outre un appariement sans fil de la pluralité de dispositifs de communication sans fil mobiles l'un avec l'autre via une communication en champ proche (NFC) lorsqu'ils sont à proximité l'un de l'autre ; et dans lequel la détermination comprend le fait de déterminer si la pluralité de dispositifs de communication sans fil mobiles sont à proximité l'un de l'autre sur la base d'un appariement sans fil entre ceux-ci.

14. Procédé de la revendication 12, comprenant en outre un appariement sans fil de la pluralité de dispositifs de communication sans fil mobiles l'un avec l'autre via une communication Bluetooth lorsqu'ils sont à proximité l'un de l'autre ; et dans lequel la détermination comprend le fait de déterminer si la pluralité de dispositifs de communication sans fil mobiles sont à proximité l'un de l'autre sur la base d'un appariement sans fil entre ceux-ci.
